Europäisches Patentamt

European Patent Office

Office européen des brevets

(19)

(11) Publication number: 0 306 302
A2

# (12) EUROPEAN PATENT APPLICATION

(21) Application number: 88308085.5

(22) Date of filing: 01.09.88

(51) Int. Cl.4: **C 09 D 3/82**
C 08 J 3/24, C 08 G 77/04

(30) Priority: 04.09.87 GB 8720818

(43) Date of publication of application:
08.03.89 Bulletin 89/10

(84) Designated Contracting States:
AT BE CH DE ES FR GB GR IT LI LU NL SE

(71) Applicant: COGENT LIMITED
Temple Court 11 Queen Victoria Street
London, EC4N 4TP (GB)

(72) Inventor: Gent, John Arthur Gooch
21 Wykwood
Liphook Hampshire (GB)

(74) Representative: Harrison, David Christopher et al
MEWBURN ELLIS & CO 2/3 Cursitor Street
London EC4A 1BQ (GB)

(54) Compositions and processes for producing scratch resistant polysiloxane coatings.

(57) A polysiloxane prepolymer is prepared in acidic aqueous solution to have a) polysiloxane-linkage-forming groups, b) non-reactive groups and c) co-reactive groups and thereafter is taken into essentially organic solution. Preferred solvents are benzene or toluene. The solution is used to coat materials to increase their scratch and abrasion resistance. Upon evaporation of the solvent additional polysiloxane linkages are formed and the co-reactive groups react. The non-reactive groups modify the properties of the prepolymer.

EP 0 306 302 A2

Bundesdruckerei Berlin

## Description

## COMPOSITIONS AND PROCESSES FOR PRODUCING SCRATCH RESISTANT POLYSILOXANE COATINGS

This invention relates to scratch resistant coatings and in particular to a process for producing scratch resistant polysiloxane coatings with improved extensibility.

A variety of products, including plastics mouldings, sheets and lenses are conventionally provided with coatings to improve their resistance to scratching and abrasion. Such coatings may be formed from polymers, such as polyurethanes, melamine-formaldehyde resins and polysiloxanes. While polysiloxanes provide the highest scratch-resistance, they suffer from the disadvantage that known "scratch resistant" polysiloxane coatings show the lowest extensibility. This means that on flexure of the base material, the conventional polysiloxane coating tends to craze. The resulting defect in the surface coating can cause initiation of a crack in the base material. Consequently, the impact strengths of known polysiloxane coated substrates tend to be lower than those of the base material. Furthermore, the impact strength of the coated substrate decreases with increase in polysiloxane coating thickness.

There is accordingly a demand for scratch resistant coatings with improved extensibility which are able to provide a high level of scratch-resistance without adversely affecting the other physical properties of the base substrate.

In EP-A-215676 (USSN 909477, in the name Gent, filed 19 September 1986) we have described the formation of prepolymers the same as the present ones, but no solvent-exchange to yield an essentially organic final solution was disclosed.

In US-A-4673354 a silane priming solution for use in dentistry is disclosed. The priming solution contains at least one hydroxy group and at least one non-hydrolyzable polymerizable organic group. These are attached to the same silicon atom.

US-A-4006271 shows the use of relatively volatile vehicles which when they evaporate cause a curing change to occur in the composition.

US-A-3961977 shows an essentially two-component system wherein an aminoalkylalkoxysilane and an epoxyalkylalkoxysilane are reacted together by partial hydrolyzation, in an essentially alcoholic solution.

US-A-4394177 and US-A-4547397 are of background interest.

According to one aspect of the present invention there is provided a prepolymer composition for forming a scratch resistant coating, comprising an essentially organic solution of a polysiloxane prepolymer having both non-co-reactive side groups and co-reactive side groups, the co-reactive side groups being additional to siloxane-linkage-forming alkoxy, hydroxy or carboxy or hydrolysable derivatives thereof, the co-reactive and non-co-reactive groups being linked to respectively different Si atoms, the prepolymer being curable by solvent evaporation to cause the formation of further siloxane linkages and also reaction together of the co-reactive groups to cure and cross-link the polymer.

The curing process involves both addition reactions between the co-reactive side groups (due to increased concentration arising from the solvent evaporation) and further formation of siloxane linkages as a result of the hydrolysis of alkoxy or carboxy groups upon a move of the composition towards basicity i.e. an increase in pH or pKa number.

A second aspect of the invention provides a method of forming a scratch resistant coating, which comprises coating a substrate with the prepolymer composition and curing it through solvent evaporation and an increase in pH or pKa.

We use the expression "pH or pKa" for these reasons:-

If the solution had remained essentially aqueous, the understanding of "increase in pH number" would of course present no problem. In the systems which are essentially organic solutions, there will in nearly all cases remain some traces of water, and as hydrolysis of protected siloxane-linkage-forming groups starts this water content will have increased somewhat. Nevertheless when water is present in small amounts only, the concept of pH is somewhat unreliable and that of pKa is preferable. The effect described by either denominator is in each case just the same: movement towards basicity (either a decrease in acidity or a move from acidity into basicity).

The increase in pH or pKa may be produced by the addition of an alkaline component, but is most suitably brought about by using the combination of a basic co-reactive side group such as amino in a silane together with a volatilisable acid in the prepolymer composition, whereby the acid volatilizes with the solvent during curing. Suitable acids are organic acids, for example lower alkanoic acids such as formic, acetic and propionic acids.

Evaporation of solvent can take place at room temperature, but suitably heat is applied, especially to assist in the removal of volatilisable acid.

According to a third aspect of the present invention there is provided a process for producing a polysiloxane prepolymer composition for forming a scratch resistant coating, which comprises:

(i) reacting in aqueous acidic solution at least one first and at least one second silane or oligomer thereof, said silanes or oligomers having siloxane-linkage-forming groups, the first silane or oligomer having at least one non-co-reactive group on a first silicon atom, and only the second silane or oligomer having a first co-reactive group (other than a siloxane-linkage-forming group) on a silicon atom, to form a reaction product with siloxane linkages by the interaction of the siloxane-linkage-forming groups, the reaction product having the said non-co-reactive group and first co-reactive group on different silicon atoms,

(ii) reacting in aqueous acidic solution at least one further silane or its oligomer which has at least one siloxane-linkage-forming group and a second group which is capable of co-reacting with the first co-reactive group in (i) under conditions of lower dilution and increased pH or pKa, to form siloxane linkages between the existing reaction product and the further silane or oligomer substantially without interaction between the first and second co-reactive groups, to yield a prepolymer solution with the first and second co- reactive groups on respective silicon atoms thereof, and

(iii) exchanging the aqueous solvent for an organic solvent whereby to yield an essentially organic solution.

Optionally, additional acid may be added to stabilize the prepolymer solution. In practice this will be done whenever the solution is not intended for immediate use. The additive may be made before or after the solvent exchange but preferably the latter because of ease of control.

In addition to water and acid, the aqueous solution may also include one or more alcohols or other water-miscible solvents.

Alcohols are preferred for that purpose for a variety of reasons. They assist in wetting the substrate during application of the coating. The lower alcohols are also relatively easily volatilised, and can form azeotropes to assist in water removal. Suitable alcohols include methyl, ethyl and isopropyl alcohols, but there is no definite limit on the number of carbon atoms, the alcohol being rather selected according to its physical properties in relation to the other components and the intended mode of use. During the course of polysiloxane formation, alcohols will be formed through the hydrolysis of the alkoxy groups, thereby increasing the alcohol content of the solution. The alkoxy groups can accordingly be selected to produce suitable alcohols in the solution. In general, alkoxy groups of 1 to 6, preferably 1 to 4 carbon atoms will be suitable.

The non-co-reactive side group or groups can be those conventionally employed in modifying polysiloxane formation; typically lower alkyls such as methyl, ethyl, isopropyl and t-butyl. Other bulky side groups may be used such as aryl and its derivatives or other non-co-reactive side groups which may be specifically added to improve adhesion to substrate such as gamma methacryloxy propyl in the case of acrylics. Bulky and/or long non-co-reactive side groups limit the extent of cross-linking by providing sites which cannot be cross-linked, and also hold the molecules apart during cross-linking so as to resist contraction as the cross-linking proceeds.

The co-reactive groups should be less reactive than the hydrolysable groups under the conditions of prepolymerisation, so that there is no substantial interaction between the co-reactive groups at that stage. This is achieved by appropriate selection of co-reactive groups, and also by selection of the conditions of prepolymerisation, in particular by maintaining a relatively high dilution, and also by appropriate choice of pH.

Suitable co-reactive groups are epoxy and amino groups. The amino groups may be primary or secondary amino. These have the advantage that amino groups catalyse the formation of the silicon-oxygen lattice, so that this, and also the interaction of the amino and epoxy groups, can be influenced by controlling the pH: in particular, a decrease in acidity will encourage the formation of cross-linkages.

Examples of other co-reactive groups are thiols reacting with epoxy, vinyl, acrylic or methacrylic groups.

At least one, and preferably each, of the co-reactive side groups forms part of a larger group in which the reactive group is separated from the silicon atom by a connecting group which has at least one single bond allowing rotation of the reactive group. Examples of connecting groups are $-(CH_2)_n-$ and $-(CH_2)_n-O-$, the latter being particularly preferred for epoxy, n preferably being an integer of 1 to 3.

A wide variety of silanes or their oligomers having different functional groups are commercially available from e.g. Union Carbide and Dow Corning. In order to provide sufficient stability in the coating solution (and a viscosity which is not excessively high), the mixture of silanes should preferably contain non-co- reactive groups in a molar amount which is at least equal to 40% of the total of co-reactive groups and other non-siloxane-linking-forming groups (e.g. epoxide, amino and alkyl groups).

Typically, the mixture of silanes or their oligomers may comprise an epoxyalkylalkoxy silane and an aminoalkylalkoxy silane in which at least two alkoxy groups are present in each silane. Generally, the mixture of silanes will include in addition at least one alkylalkoxy silane in order to increase the proportion of non-co-reactive groups in the composition.

Typical amino containing silanes are amino (lower alkyl) triethoxy or trimethoxy silanes. Suitable epoxy silanes include glycido lower alkyl triethoxy or trimethoxy silanes. Dimers or oligomers of these alkoxy silanes may be used. The alkyl-alkoxy silane is preferably a lower alkyl triethoxy or trimethoxy silane.

As an optional ingredient of the silane mixture, one may use silanes containing other functional groups, e.g. groups which improve adhesion to the substrate, and groups which modify viscosity. For example, the presence of silanes containing methacrylic groups can be used to improve adhesion of the modified polysiloxane coatings to polymethyl methacrylate substrates.

As indicated above the mixture of silanes preferably contains non-co-reactive groups in a mole per cent of at least 20, normally at least 30, based on the total amount of co-reactive groups and non-co-reactive groups, i.e. other non-hydroxyl or non-hydrolyzable groups attached to the silicon atom. It is not essential for the epoxide and amino groups (or other co-reactive groups) to be present in stoichiometric proportions. However, we prefer to formulate the composition so that it contains an excess of amino groups since these groups both catalyse the formation of the Si-O lattice (by virtue of their basic character) as well as reacting with the epoxide groups.

In carrying out the preparation process, the initial solution at controlled pH may be allowed to age for a period, e.g. 24 hours, to form siloxane linkages, whereupon the silane having the other co-reactive group is added, again controlling pH, either in solution or done. The solution is allowed to age for a further period, e.g. 30 mins, for the added silane or their oligomers to react with the existing siloxanes through their hydrolysable groups; and then the acidity is adjusted to pH 3 to 6. This stepwise addition of the silanes or their oligomers having co-reactive groups prevents premature reaction between the co-reactive groups.

The prepolymer could then be used immediately for coating, or it could be stored until required. In the latter case, it may be desirable to add further solvent or acid, or both, to stabilise the solution and give it appropriate shelf-life. However, in the present invention, the aqueous medium is exchanged for an organic solvent, preferably hydrocarbon, to yield a substantially organic solution.

After application the coating is preferably heated to remove the volatile components and bring about cure of the coating by formation of siloxane linkages and cross-linking through the co-reactive groups. However, the coating compositions will dry and cure at ambient temperatures when coated in a thin film on a substrate. The removal of volatile components increases the pH or pKa so as to make the groups more reactive (and in the case that the siloxane-linkage-forming groups have been stabilized by additional acid, hydrolyzing off the protective group) and increases the concentration (decreases the dilution of molecules) so that the co-reactive groups are brought into closer proximity.

A reason for the solvent exchange is that for some application of the scratch resistant coating, a higher rate of achieving a tack-free dryness is desired than would be available if a major component of the evaporating solvent were water; and though this solvent-change means that the layer of solution as applied is no longer essentially aqueous and the water needed to assist initiation of the condensation curing process will normally be derived from ambient atmosphere moisture, for the coatings which are envisaged this is perfectly acceptable. There will usually also be traces of remanent water in the solvent-exchanged solution; and further water is produced as condensation curing proceeds.

The prepolymer coating solution may be applied to a clean substrate by any known coating method, such as any of the methods described in US Patent No. 4006271. Normally, the substrate will be an easily scratched surface, but the coating composition can be applied to any substrate including wood and steel. The composition can be used to coat mouldings, shaped articles and sheet or film. Examples of polymer materials which are advantageously coated with the composition include polyesters, polycarbonates, and polymethyl methacrylates.

The use of organic solvent systems allows the use of the composition where essentially aqueous systems would be less suitable or could not be used; notably where it is required to cure under ambient conditions e.g. on the surface of GRP (glass reinforced polyester) articles, on PVC articles such as tiles, on natural or artificial leather, as an ingredient in paint varnish or lacquer, as a coating for steel or painted surfaces, as a coating of siliceous materials, or as a transfer coating (or a component thereof) for application to a mould in a moulding process.

A further application is in the formation of screen-printing compositions; a filler, especially a thixotropic agent such as an aerosil, is formulated with the solution to yield a paste or ink of the desired properties.

It is a remarkable property of the prepolymer systems that they are satisfactorily soluble, and most importantly stable, both in aqueous and in organic solvents such as hydrocarbons.

The organic solvents used will be selected with a view to certain criteria:
- They will be inert to the other components in the coating formulation
- They will be substantially immiscible with water
- They will permit removal of essentially all of the water
- They will be adequately volatile under the expected conditions of use - desirably to be at ambient temperatures
- They will be substantially neutral.

To permit separation of the water, the chosen organic solvent may have a higher boiling-point than water. Then, the water some alcohol and some acid will be distilled off. Even though an acid such as acetic acid will form an azeotrope with the water, sufficient will be present to maintain the stability of the prepolymer solution by preserving carboxy e.g. acetoxy groupings in replacement of alkoxy.

An alternative solvent-separation technique may be simple physical phase-separation.

Examples of suitable organic solvents are:
toluene, xylene, octane, benzene, styrene, ethyl benzene, as well as mixtures of any of these.

Solvents desirably will have volatilities defined by values of saturated vapour pressure at ambient temperature (say 20° C) in the range 2mm to 100mm, more preferably 5mm to 50mm.

The organic-solvent prepolymer solution can be prepared to a desired dilution in the range 1 to 60% solid content.

The compositions of the invention may also include other conventional ingredients for modifying the properties. Examples of these are dyestuffs, levelling agents and fillers, together with other known adhesion promoting additives such as zirconium and titanium derivatives.

The following examples will illustrate the invention and the manner in which it may be carried into effect.

Example 1

A solution of cross-linkable organo polysiloxane was prepared by adding with stirring a mixture of 88.85g methyl trimethoxysilane (Dow Corning Z6070) and 37.05g of gamma glycidoxypropyl trimethoxysilane (Dow Corning Z6040), to a solution comprising 21.88g of distilled water, 27.71g of propan-2-ol, and 0.85g of glacial acetic acid. The resultant solution was allowed to stand for 24 hours, forming an initial polysiloxane having methyl (non-reactive) groups, epoxy (one of the co-reactive) groups, and some unpolymerised methoxy groups.

To this solution was then added an additional 64.09g of water, 39.36g of propan-2-ol, 51.56g of butan-1-ol and 8.80g of glacial acetic acid, to increase the dilution; and then 34.67g of gamma-amino-propyl triethoxysilane (Union Carbide A1100) was added and allowed to stand 30 minutes.

This extended the polymer largely by reaction of ethoxy groups of the added silane with methoxy groups of the existing polysiloxane; the lower reactivity of the amino and epoxy groups, especially under the conditions of dilution and acidity, largely preventing these groups from interacting at this stage.

An additional 14.37g of glacial acetic acid was then added.

To 100g of this solution was added 150g of toluene, and 25g acetic acid. The mixture was heated to approximately 105°C. Azeotropes of water, toluene, alcohols and acetic acid were formed and using a Dean Stark Unit the majority of the aqueous component was removed. The solids content of the prepolymer solution was adjusted to 15% by weight.

A coating was applied to glass reinforced polyester using a brush technique to give a dry coating weight of 25 grammes per square metre and left at ambient temperature without forced draughts or air agitation. After 20 mins it was tack-free.

After 48 hours the resultant coating was found to have good gloss and to have good scratch resistance as determined by rotating 50 times with an 000 steel wool pad under a load of 500g/cm$^2$.

It was also found to have excellent adhesion to the substrate.

Example 2

A solution of cross-linkable organo polysiloxane was prepared by adding with stirring, a mixture of 16.72g of gamma methacryloxy propyl trimethoxy silane (Union Carbide A-174) with 3.85g of gamma glycidoxy propyl trimethyl silane (Dow Corning Z6040) top a solution comprising of 5.20g distilled water, 6.58g of propan-2-ol and 0.21g of glacial acetic acid. To this mixture was added, with stirring, a mixture of 4.96g of gamma glycidoxy propyl trimethoxy silane (Dow Corning Z6040) with 11.90g of methyl trimethoxy silane (Dow Corning Z6070). This was allowed to stand at 20°C for 24 hours.

To this solution, with stirring, was added 15.22g of distilled water, 9.36g of propan-2-ol, 12.25g of butan-1-ol, and 2.09g of glacial acetic acid and then 8.24g of gamma amino propyl triethoxy silane (Union Carbide A-1100). After 30 minutes 3.42g of glacial acetic acid was added.

This solution was stored at 20°C for 24 hours.

Then, to 30g of this solution was added 0.50g of glacial acetic acid and 45g of toluene.

The resultant solution was placed in a rotary evaporator at 20°C and volatiles removed under vacuum to yield a prepolymer solution essentially in toluene having a solids content of 28% by weight.

Using this solution a coating was applied to a glass reinforced polyester using a brush technique to give a dry coating weight of 25 grammes per square metre.

After 48 hours at ambient temperature the coating was found to have good gloss, excellent adhesion and good abrasion resistance.

After 7 days the coating had excellent abrasion resistance as determined by rubbing with steel wool (Grade 000).

Example 3

When Example 2 was repeated, but benzene was used instead of toluene as the organic solvent, similar results were obtained to those in Example 2.

Example 4

The solution as prepared in Example 2 was applied to a mild steel substrate using a brush technique to give a dry coating weight of 25 grammes per square metre.

After 30 minutes at 120°C the resultant coating had good gloss, excellent adhesion and abrasion resistance.

Example 5

The solution as prepared in Example 2 was coated onto an aluminium foil using a Meyer Bar to give a dry coating weight of 5 grammes per square metre.

After 30 minutes at ambient temperature, the resultant coating was touch dry. After 24 hours the resultant coating was found to have good gloss and excellent adhesion. After 72 hours the coating had excellent abrasion resistance.

Example 6

A solution of a cross-linkable organo polysiloxane was prepared by adding, with stirring, a mixture of 117.04g of methyl trimethyoxy silane (Dow Corning Z6070) with 48.84g of gamma glycidoxy propyl trimethoxy silane (Dow Corning Z6040) to a solution comprising 28.83g of distilled water, 36.47g of propan-2-ol and 1.18g of glacial acetic acid. This was allowed to stand at 20°C for 24 hours.

To this solution, with stirring, was added 84.39g of distilled water, 51.87g of propan-2-ol, 67.93g of butan-1-ol and 11.59g of glacial acetic acid and then 32.91g of gamma mercapto propyl trimethoxy silane (Union Carbide A-189). After 30 minutes 18.96g of glacial acetic acid was added to the solution.

This solution was stored at 20°C for 8 days.

Then, to 76g of this solution was added 114g of toluene. Azeotropes of water, toluene, alcohols and acetic acid were formed and using a rota-evaporator at 20°C and under vacuum, the majority of the aqueous component was removed. When the resultant solids content of the prepolymer solution was 25% by weight, 1.15g of glacial acetic acid was added as stabilizer.

A coating of this solution was applied to glass reinforced polyester using a brush technique to give a dry coating weight of 25 grammes per square metre. After one hour at 75°C the resultant coating was found to have good gloss and good scratch resistance.

It was also found to have excellent adhesion to the substrate.

This solution was also applied to a mild steel panel and an aluminium panel using a brush technique to give a dry coating weight of 25 grammes per square metre.

After 30 minutes at 120°C the resultant coatings were found to have good gloss and good scratch resistance.

The coatings were also found to have excellent adhesion to the substrates.

### Example 7

To the solution prepared as in Example 1 was added 0.16g of amino zirco-aluminate chloride hydroxide polymer (an adhesion promoter - Cavedon Chemical Co. -CAVCO MOD APG-2) and this was placed in a high shear mixer for 30 seconds to dissolve the polymer.

The solution thus prepared as described above was used to coat a 75 x $10^{-6}$ metre thick polyethylene terephthalate film, using a wire wound applicator rod. The film was dried for 2 hours at 97°C to give a dry coating weight of 10.4 grammes per square metre.

The resultant film when wrapped around a 5mm diameter mandrel did not crack or craze.

### Example 8

A solution for a cross-linkable organo polysiloxane was prepared by adding, with stirring, a mixture of 22.82g of methyl trimethoxysilane (Dow Corning Z6070) with 9.53g of gamma glycidoxy propyl trimethoxysilane (Dow Corning Z6070) to a solution comprising 5.62g of distilled water, 7.11g of propan-2-ol, and 0.23g of glacial acetic acid. This was allowed to stand at 20°C for 24 hours.

To this solution, with stirring, was added 16.46g of distilled water, 10.12g of propan-2-ol, 13.25g of butan-1-ol and 2.26g of glacial acetic acid and then 8.91g of gamma amino-propyl triethoxy silane (Union Carbide A-1100). After 30 minutes 3.70g of glacial acetic acid was added. This solution was stored at 20°C for 24 hours.

Then, to 30g of this solution was added 1.1g of glacial acetic acid and 45g of toluene. The solution was placed in a rota-evaporator at 20°C and volatiles removed under vacuum to yield a solution having a solids content of 33% by weight in which the residual solvent was predominantly toluene.

A coating was applied to glass reinforced polyester using a brush technique to give a dry coating weight of 25 grammes per square metre. After one hour at 80°C the resulting coating was found to have good gloss and good scratch resistance.

It was also found to have excellent adhesion to the substrate.

### Example 9

In place of the toluene employed in Example 8, xylene is used with similar results.

### Claims

1. A prepolymer composition for forming a scratch resistant coating, comprising an essentially organic solution of a polysiloxane prepolymer having a non-co-reactive group on a first silicon atom, a co-reactive group on a second silicon atom and a second co-reactive group on a third silicon atom, the two co-reactive groups being capable of a cross-linking reaction together, the composition being curable by evaporation of solvent and an increase in pH or pKa causing formation of further siloxane linkages and also causing the co-reactive side groups to react together to cross-link the polymer.

2. A prepolymer composition according to claim 1 wherein the siloxane-linkage-forming groups of the prepolymer are alkoxy groups or acid-stabilised hydrolysable derivatives thereof, whereby the curing process involves formation of further siloxane linkages through the interaction of hydrolysed such groups.

3. A process for producing a polysiloxane prepolymer composition for forming a scratch resistant coating, which comprises:

(i) reacting in aqueous acidic solution at least one first and at least one second silane or oligomer, said silanes or oligomers having siloxane-linkage-forming groups, the first silane or oligomer having at least one non-co-reactive group on a first silicon atom, and only the second silane or oligomer having a first co-reactive group (other than a siloxane-linkage-forming group) on a silicon atom, to form a reaction product with siloxane linkages by the interaction of the siloxane-linkage-forming groups, the reaction product having the said non-co-reactive group and first co-reactive group on different silicon atoms,

(ii) reacting in aqueous acidic solution at least one further silane or its oligomer which has at least one siloxane-linkage-forming group and a second group which is capable of co-reacting with the first co-reactive group in (i) under conditions of lower dilution and increased pH or pKa, to form siloxane linkages between the existing reaction product and the further silane or oligomer substantially without interaction between the first and second co-reactive groups, to yield a prepolymer solution with the first and second co-reactive groups on respective silicon atoms thereof, and

(iii) exchanging the aqueous solvent for an organic solvent whereby to yield an essentially organic solution.

4. A process according to claim 3 wherein

(iv) further acid is added to stabilize the prepolymer solution.

5. A process according to claim 4 wherein step (iv) is carried out after step (iii).

6. A composition or process according to any one of the preceding claims wherein the solvent of step (i) also comprises one or more volatilisable alcohols.

7. A composition or process according to any one of the preceding claims wherein the organic solvent is a hydrocarbon.

8. A composition or process according to any one of the preceding claims wherein the organic solvent has an SVP at 20°C in the range 5mm to 50mm.

9. A composition or process according to any one of the preceding claims wherein acidity is provided by the presence of a volatilisable organic acid.

10. A composition or process according to any one of the preceding claims wherein the non-co-reactive side groups are one or more of alkyl, aryl, or methacrylic groups.

11. A composition or process according to any one of the preceding claims wherein the co-reactive side groups comprise amino and epoxy groups.

12. A composition or process according to any one of claims 1 to 10 wherein the co-reactive side groups comprise thiol reacting with epoxy, vinyl, acrylic or methacrylic groups.

13. A composition or process according to any one of the preceding claims wherein at least one of the co-reactive side groups forms part of a larger group in which the co-reactive group is separated from the silicon atom by a connecting group which has at least one single bond allowing rotation of the co-reactive group.

14. A composition or process according to claim 13 wherein the connecting group comprises $-(CH_2)_n-$ or $-(CH_2)_n-O-$, wherein $n = 1$ to 3.

15. A method forming a scratch resistant coating which comprises coating a substrate with a prepolymer composition of any of the preceding claims, and curing it through evaporation of solvent and an increase in pH or pKa.

16. A method according to claim 14 wherein the increase in pH or pKa is brought about by using a volatilisable acid in the prepolymer composition, whereby the acid evaporates with the solvent during the curing process.